(19) Europäisches Patentamt
European Patent Office
Office européen des brevets

(11) Publication number: 0 112 438 B1

(12) # EUROPEAN PATENT SPECIFICATION

(45) Date of publication of patent specification: 09.09.87

(51) Int. Cl.[4]: A 01 N 25/14, A 01 N 33/18

(21) Application number: 83108708.5

(22) Date of filing: 03.09.83

(54) **Method for the preparation of water dispersible granular herbicidal compositions with increased thermal stability.**

(30) Priority: 20.12.82 US 451140

(43) Date of publication of application: 04.07.84 Bulletin 84/27

(45) Publication of the grant of the patent: 09.09.87 Bulletin 87/37

(84) Designated Contracting States: AT BE CH DE FR GB IT LI NL SE

(56) References cited:
GB-A- 537 186
GB-A-2 037 585
US-A-3 028 305
US-A-4 082 537
US-A-4 150 969

CENTRAL PATENTS INDEX, BASIC ABSTRACTS JOURNAL, Section C, AGDOC, Week E25, 18th August 1982, London (GB);

The file contains technical information submitted after the application was filed and not included in this specification

(73) Proprietor: AMERICAN CYANAMID COMPANY
1937 West Main Street P.O. Box 60
Stamford Connecticut 06904-0060 (US)

(72) Inventor: Mookerjee, Pradip K.
448 Vine Hill Way
Martinez California 94553 (US)
Inventor: Misselbrook, John
c/o 12 The Grove Sholing
South Hampton, SO 2 9LX (GB)

(74) Representative: Wächtershäuser, Günter, Dr.
Tal 29
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

## Description

The present invention relates to a method for the preparation of water-dispersible granular compositions containing dinitroaniline herbicides of structural formula (I)

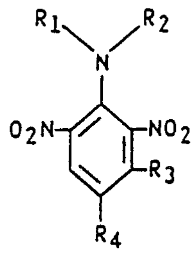

wherein $R_1$ is selected from H, $C_1$—$C_4$ straight or branched-chain alkyl, $C_3$—$C_4$ alkenyl and $C_3$—$C_4$ alkynyl; $R_2$ is selected from $C_1$—$C_6$ straight or branched chain alkyl and optionally substituted with Cl or $OCH_3$, $C_3$—$C_4$ alkenyl, and $C_3$—$C_4$ alkynyl; $R_3$ is H, $CH_3$ or $CH_2OCH_3$; $R_4$ is $C_1$—$C_4$ alkyl, $CF_3$ or Cl; and said compositions are characterized by improved storage stability at elevated temperatures.

A number of formula (I) herbicides, such as N-(1-ethylpropyl)-2,6-dinitro-3,4-xylidine are highly sought after for the selective control of certain grasses in the presence of agricultural crops; while some of the compounds of formula (I) are efficacious for the control of broadleaf weeds.

Customarily, such herbicides may be formulated as wettable powders, dispersible granules, emulsifiable concentrates and flowables. Of these, the dispersible granular formulations offer ease of handling coupled with reduced dusting, and of course, the absence of an organic, flammable and possible toxic solvent that would be present if an emulsifiable concentrate were used instead.

Unfortunately, however, conventional dispersible granular compositions (or wettable powders) containing formula (I) dinitroaniline herbicides which are solid at room temperature but have melting points below 100°C, have a tendency to cake, fuse or lump up when stored at or exposed to elevated temperatures, due to the excessive softening or partial melting of said formula (I) herbicides. In general the above referred-to conventional compositions are prepared by blending and milling the appropriate amount of the selected formula (I) dinitroaniline herbicide, a conventional inert carrier and one or more wetting and/or dispersing agent(s), followed by granulating said blend in the appropriate equipment using a binder solution as the granulating agent.

A currently available method for the preparation of wettable powder compositions of said low melting compounds is exemplified by GB—A—2037585 which describes the preparation of compositions containing moderate quantities (10—50%) and preferably (15—30%) of a low melting herbicide. However, this method requires the use of specific specially treated silica derivatives in order to prepare stable compositions as indicated below.

A suitable choice of silica derivative must be made in order to overcome caking in the formulation. Not all silicas can be employed for this purpose and the efficacy of the silica material appears not only to depend on its physical properties but also to be related to its chemical nature, the effect being limited to fumed or precipitated silicas. A mixture of fumed and precipitated silicas may, of course, be employed. Other silica materials which are widely used in herbicide formulations such as precipitated silicates and micronised silica are not effective for the purpose.

Fumed silica is the product of burning silicon tetrachloride ($SiCl_4$) in an atmosphere of oxygen and hydrogen. The average particle diameter of the resulting material is generally within the range of 2 to 50 millimicrons and the surface area between 175 and 400 square metres per gram, as measured by the Brunauer, Emmett and Teller equation [J. Amer. Chem. Soc., *60:*309 (1938)]. Precipitated silica may be prepared by chemical reaction of an alkali metal silicate, such as for example sodium silicate, with mineral acid such as for example hydrochloric acid, followed by adjustment of the pH to cause precipitation. The precipitate is then separated, washed and dried. Its particle size is generally within the range of 5 to 50 millimicrons and its surface area between 50 and 350 square metres per gram.

Preferably, the composition also comprises a solid inert carrier which can be any of the materials well known in the art for preparing solid herbicidal formulations, and these include, for example, kaolin, talc, montmorillonite, attapulgite, diatomaceous earth and hydrated sodium silicoaluminate.

GB—A— 537 186 describes water dispersible compositions containing finely divided phenols. Caking of the composition is avoided by addition of more than equal weight of bentonite relative to the active ingredient.

US—A—3 028 305 describes free flowing granular heptachlor compositions. A special carrier system comprising three inert carrier materials is used to obtain the desired non-caking property of the composition.

US—A— 4 082 537 and US—A—4 150 969 describes herbicidal compositions containing a dinitroaniline compound of formula I. The addition of special surfactants prevents formation of large crystals of the herbicidal compounds of formula I when in wettable powder form.

It is the object of the present invention to prepare a heat-stable water dispersible granular herbicidal composition containing high concentrations of a low melting dinitroaniline herbicide of formula I.

According to the present invention the object is solved by a method for the preparation of heat-stable dispersible granular compositions characterized by admixing, at ambient or elevated temperatures, 50 to 70%, on a weight basis, of a compound of structural formula (I)

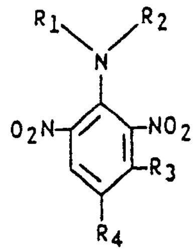

wherein $R_1$ is hydrogen, $C_1$—$C_4$ straight or branched-chain alkyl, $C_3$—$C_4$ alkenyl or $C_3$—$C_4$ alkynyl; $R_2$ is $C_1$—$C_6$ straight or branched-chain alkyl and optionally substituted with Cl or $OCH_3$, $C_3$—$C_4$ alkenyl or $C_3$—$C_4$ alkynyl, $R_3$ is hydrogen, $CH_3$ or $CH_2OCH_3$; $R_4$ is $C_1$—$C_4$ alkyl, $CF_3$ or Cl; 0.0% to 3% sodium dioctyl sulfosuccinate or ethoxylated diamines having the following formula,

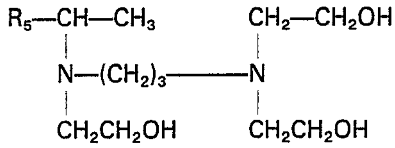

wherein $R_5$ is $C_9$—$C_{20}$ alkyl; 2 to 7.5% of a wetting agent selected from sodium N-methyl-N-oleoyltaurate, octylphenoxy polyethoxy ethanol and nonylphenoxy polyethoxy ethanol; 2 to 6% of a dispersing agent selected from sodium lignin sulfonate and the sodium salt of a naphthalene sulfonic acid-formaldehyde condensate; 0.0 to 7.5% of a highly sorptive hydrophilic or hydrophobic precipitated silica or fumed silica or calcium silicate; and naturally-occurring swelling, hydrous sodium and magnesium aluminum silicate clays having a montmorillonite unit cell structure in amounts sufficient to total the composition to 100%; cooling the thus-obtained mixture if admixed at elevated temperatures; milling said mixture to a particle size of about 5 to 10µm; and granulating same with water.

It is now found, that by the method of the present invention, dispersible granular and wettable powder compositions containing high concentrations (up to 70%) and of low melting pesticidal compounds may be prepared utilizing naturally occurring swelling hydrous aluminum silicate clays which remain free-flowing and do not agglomerate, lump-up or fuse when stored at, or are exposed to elevated temperatures in the range of about 50°C for a prolonged period of time.

The finding that certain naturally occurring swelling clays, are suitable for preparing heat-stable wettable powder, and dispersible granular compositions, containing high concentrations (50—70% by weight), of low melting materials is unexpected. Lower concentration compositions may also be prepared as can mixtures of active ingredients.

Further, said heat stable compositions may be prepared at ambient temperatures by the method of the present invention. Prior methods for preparing heat stable compositions of low-melting materials required impregnation of the low-melting active ingredient, either in a solvent, which subsequently had to be removed, or as a melt, onto sufficient quantities of specially treated silica derivatives to absorb all the materials as stated above.

While the present invention provides a method for preparing heat-stable compositions of low-melting materials at ambient temperatures, these compositions may also be prepared at elevated temperatures if for some reason this is desirable, as is the case with the substituted N,N-dialkyl-2,6-dinitroaniline herbicides.

Naturally-occurring swelling clays suitable for use in said compositions may be described as hydrous, sodium and magnesium aluminum silicates having a montmorillonite unit cell structure. The montmorillonite unit cell has two silicon-oxygen sheets with an aluminum hydroxyl sheet sandwiched between them. Montmorillonite is described as a "Si-Al-Si" structure.

Commercially available, naturally occurring swelling clays include VOLCLAY® Wyoming Bentonites, VEEGUM®, or other naturally occurring swelling clays which contain the same montmorillonite unit structure and properties.

Thus, from 50 to 70% by weight (preferably 50—60%) of a dinitroaniline of formula (I) is admixed with from 20—87.5% by weight of a swelling bentonite, 2—7.5% by weight of a wetting agent, 2—6% by weight of a dispersing agent, and up to 7.5% by weight of a precipitated silica either at ambient or, if so desired, at elevated temperatures wherein said formula (I) herbicides are melted, until a homogeneous mixture is obtained.

The mixture obtained is passed through a mill fitted with a 1,58 to 6,35 mm (1/16 to 1/4 inch) screen followed by air milling at 6,897—7,241 bar (100—105 psi) to a particle size 5 to 10µm.

If a wettable powder is desired, this material is then blended with 0.25—1.0% of hydrophobic silica powder and packaged.

If a dispersable granule is desired, the above milled mixture is wet agglomerated with a granulating blender, dried at 50°C to contain less than 2% water and is then passed through a screen to obtain the desired 0,25—2,0mm fraction (10 to 60 mesh size range.)

This mixture is blended with 0.25—1.0% by weight of a hydrophobic silica powder to aid in maintaining the free-flow characteristics of the mixture and is then packaged.

Thus, the preparation of a typical formulation of the present invention may be illustrated as follows: 65.87% by weight of flaked technical N-(1-ethylpropyl)-2,6-dinitro-3,4-xylidine containing 1.1% by weight of sodium dioctylsuccinate (92% active ingredient) is admixed at ambient temperature with 22% by weight of a naturally occurring swelling bentonite clay, 5% by weight of sodium N-methyl-n-oleyl taurate, 2.5% by weight of sodium naphthalene sulfonate condensate and 4% by weight precipitated silica until the mixture is homogeneous.

This mixture is passed through a mill fitted with a 1,58 to 6.35 mm (1/16 inch to 1/4 inch) screen and then through an air mill at 6,897—7,241 bar (100—105 psig) to a particle size of 5 to 10µm.

The thus-obtained powder is tumbled in a suitable granulator and wet-agglomerated with water. The granules are then dried at 50°C to contain less than 2% moisture, separated to the desired size range of from 0,25—2,0 mm (10 to about 60 mesh) and coated with from 0.25% to about 1.0% of fumed hydrophobic silica.

The present invention is further illustrated by the following examples.

## Example 1

### Evaluation of dispersible granular formulations of dinitroaniline herbicides prepared by the method of the invention

The dinitroaniline herbicide containing sodium dioctylsulfosuccinate is admixed at the desired temperature with a swelling bentonite, sodium N-methyl-N-oleoyltaurate, sodium naphthalene sulfonate condensate and precipitated silica, until homogeneous.

The mixture is milled through a 1,58 to 6.35 mm (1/16 to 1/4 inch screen and then through an air mill at 6,897—7,241 bar (100—105 psig) to a particle size of 5 to 10µm.

This powder is wet-agglomerated with water in a suitable granulation blender and then dried to contain less than 2% water. The desired fraction of 0,25—2,0 mg (10 to 60 mesh size range) is collected by screening and coated with a fumed hydrophobic silica. The composition of the formulations is given in Table I below.

TABLE I

Compositions of granular and wettable powder compositions utilizing swelling clays

| No | % Active Ingredient | Active Ingredient | % Sodium dioctylsulfo-succinate | % Swelling clay | % N-methyl-n-oleyl taurate | % Sodium naphthalene sulfonate | % Precipi-tated silica | % Fumed silica |
|---|---|---|---|---|---|---|---|---|
| 1 | 60.0 | N-(1-ethylpropyl-2,6-dinitro-3,4-xylidene | 0.72 | 22.0 | 5.0 | 2.5 | 1.9 | 0.25 |
| 2 | 60.0 | N-(ethylpropyl)-2,6-dinitro-3,4-xylidene | 0.72 | 25.8 | 5.0 | 2.5 | 0 | 0.25 |
| 3 | 55.0 | N-(ethylpropyl)-2,6-dinitro-3,4-xylidene | 0.66 | 22.0 | 5.0 | 2.5 | 4.7 | 0.25 |
| 4 | 52.5 | N-(1-ethylpropyl)-2,6-dinitro-3,4-xylidene | 0.63 | 22.0 | 5.0 | 2.5 | 6.1 | 0.25 |
| 5 | 50.0 | N-(1-ethylpropyl)-2,6-dinitro-3,4-xylidene | 0.60 | 22.0 | 5.0 | 2.5 | 7.5 | 0.25 |
| 6 | 60.0 | α,α,α-trifluoro-2,6-dinitro-N,N-dipropyl-*p*-toluidine | 0 | 22.0 | 5.0 | 2.5 | 5.3 | 0.25 |

Example 2

Evaluation of suspensibility of heat stressed wettable powder compositions

A 5.0 g sample of the appropriate composition is mixed with 50 ml water, the mxiture stirred for 30 seconds and is then transferred to a 100 ml volume and mixed thoroughly by inverting the cylinder end over end 30 times at the rate of one complete cycle every two seconds. The graduated cylinder is then allowed to stand in a water bath for 0.5 hours at 30°C. A 25 ml aliquot is then removed from approximately the middle of the graduated cylinder and evaporated to dryness. The residue is weighed, and from the data obtained the percent suspension is calculated. Another sample of the suspension is filtered through a wet 0,074 mm (200 mesh) screen to determine the percent retention. These tests are run with standard hard water designed to provide a hardness of 345 ppm calculated as calcium carbonate [having the following composition: 0.304 g $CaCL_2$ and 0.139 g $MgCl_2 \cdot 6H_2O$ per l $H_2O$]. The results obtained are given in Table II below.

TABLE II

Evaluation of the suspensibility of heat stressed wettable powder compositions of the invention and comparative compositions in standard hard water

| Clay type | Composition | Determination of | Unstressed | Stressed at 50°C |
|---|---|---|---|---|
| Swelling | 1 | % Suspensibility | 93. 4 | 91.0 |
| | | % Wet sieve retention | <0.1 | 0.23 |
| Non- | 1 ′ | % Suspensibility | 96.2 | 79.2 |
| swelling | | % Wet sieve retention | 0.87 | 3.06 |
| Non-swelling | 1 ″ | % Suspensibility | 93.8 | 59.22 |
| | | % Wet sieve retention | 0.78 | 4.16 |
| Non-swelling | 1‴ | % Suspensibility | 95.9 | 76.0 |
| | | % Wet sieve retention | 0.67 | 0.87 |

It can be seen from Table II above that wettable powder compositions of the invention suspend well in hard water after being subjected to heat stress, while similar compositions prepared with naturally occurring non-swelling clays do not.

Example 13
Dispersibility of granular compositions

A 10.0 g sample of the appropriate composition is stirred at 350—400 rpm with 200 ml of standard hard water at 5°C. A 10 ml aliquot is taken from the test system at 30 seconds, 1 minute, 2 minutes and 3 minutes; each sample is then filtered through a 0,149 mm (100 mesh) filtering system and transferred into a petri dish and dried to constant weight at 50°C and the weight recorded. This procedure is replicated three times for each composition and the percentage of each sample dispersed at each time interval is then calculated.

The results of these tests are reported in Table III below, from which it can be seen that the granular compositions of the present invention exhibit superior dispersability to that of the comparative examples prepared with non-swelling clays.

TABLE III
Comparative percentage disintegration of granular compositions utilizing swelling clays and non-swelling clays

| Type of Clay | Composition Number | Percent Disintegration | | | |
|---|---|---|---|---|---|
| | | 30 sec | 1 min | 2 min | 3 min |
| Swelling | 1 | 81.9 | 93.5 | 96.4 | 98.7 |
| Non-Swelling | 1′ | 8.0 | 8.0 | 17.0 | 17.0 |
| Non-Swelling | 1″ | 8.0 | 6.1 | 7.9 | 14.7 |
| Non-swelling | 1‴ | 6.0 | 9.8 | 9.8 | 13.2 |
| Swelling | 2 | 75.3 | 89.7 | 96.2 | 97.1 |
| Swelling | 3 | 79.3 | 93.6 | 96.1 | 97.0 |
| Swelling | 4 | 79.0 | 94.8 | 96.0 | 96.2 |
| Swelling | 5 | 89.7 | 87.7 | 94.5 | 98.7 |
| Swelling | 6 | 30.0 | 66.1 | 91.3 | 96.4 |

When the present invention utilizes elevated temperatures, one of the ways in which to form a heat-stable granular composition is as follows:

50 to 70%, and preferably 50 to 55% by weight of a dinitroaniline of formula-(I) is melted and heated (preferably 20 t0 25°C above its melting point) and then sprayed onto 5 to 25% by weight of a highly sorptive carrier selected from hydrophilic or hydrophobic precipitated or fumed silicates or calcium silicates. This mixture is agitated until all of the molten herbicide is absorbed and a free flowing powder is obtained. Next, a clay as hereinbefore defined such as montmorillonite, attapulgite, bentonite or kaolin is added in amounts sufficient to adjust the sum of all the other ingredients of the composition to 100%. The mixture is then milled (preferably air-milled) to a 5 to 10µm particle size range.

The thus obtained powder is then kept in motion and sprayed with an aqueous solution containing from 2 to 7.5% by weight of a formulation of a wetting agent selected from sodium N-methyl-N-oleoyltaurate, octylphenoxy or nonylphenoxy polyethoxy ethanol, or sodium α-olefin sulfonate, and a dispersing agent such as sodium lignin sulfonate or the sodium salt of a naphthalene sulfonic acid — formaldehyde condensate which has an average molecular weight of 600 to 800 daltons. Agitation continues until well-formed granules are obtained. The granules are sorted through sieves obtain the desired size range, dried and if desired blended with 1 to 5% by weight of a hydrophobic silica powder to enhance the free-flowing characteristics of said formulation. The thus prepared granular compositions resist caking and/or lumping when stored at or exposed to temperatures in the range of about 50°C and also disperse well in water without the formation of large particles.

The surfactant, referred to hereinabove as "octylphenoxy polyethoxy ethanol" has an average molecular weight of 628 and contains an average of 9 to 10 ethylene oxide units, representing 67% by weight, of said surfactant. The specific gravity of this surfactant is 1.065 at 25°C; the viscosity is 240 cps at

25°C (Brookfield; 12 rpm), and the flash point is >148°C (TOC). Nonylphenoxy polyethoxy ethanol has an average molecular weight of 640 and contains an average of 9 to 10 ethylene oxide units. The specific gravity of this surfactant is 1.056 at 25°C, the viscosity is 240 cps at 25°C (Brookfield; 12 rpm) and the flash point is >148°C (TOC).

It should be noted that in the above preparation equally good results may be obtained if the solid dinitroaniline herbicide of formula-(I) is added to the agitated highly sorptive carrier which is preheated and maintained at a temperature range approximately 20 to 25°C higher than the melting point of the respective herbicide. As a further alternative, the molten herbicide may be sprayed onto the preheated carrier. This mixture is then cooled to room temperature prior to proceeding with additional steps.

As stated above, the described method yields free flowing non-agglomerating an non-caking compositions of formula-(I) dinitroaniline herbicides having melting points below 100°C. Especially preferred are the herbicides selected from: N-(1-ethylpropyl)-2,6-dinitro-3,4-xylidine, α,α,α-trifluoro-2,6-dinitro-N,N-dipropyl-p-toluidine and N-butyl-N-ethyl-α,α,α-trifluoro-2,6-dinitro-*p*-toluidine.

A further advantage of the method of the present invention is that when certain of the dinitro-aniline herbicides of formula-(I), which have the property of existing in two polymorphic forms, are melt absorbed on highly absorptive carriers of the types named above, they are apparently inhibited from undergoing a polymorphic change. This change normally occurs while said compounds are stored, and usually culminates in the formation of large crystals of the thermodynamically stable polymorphic form from the originally microcrystalline, compounds of the metastable polymorphic form. The presence of such large crystals is undesired in ready-to-use formulations since such crystals may clog the spray delivery system, and may also result in nonuniform distribution on the fields being sprayed. Although melt absorption of dinitroaniline herbicides as described above inhibits the formation of such large crystals, we prefer to use the methods described and disclosed in U.S. Patent No. 4,082,537 and (U.S. Patent No. 4,150,969). That is, we prefer to incorporate from about 3% by weight of sodium dioctyl sulfosuccinate inhibitor or ethoxylated β-diamine of the following structural formula:

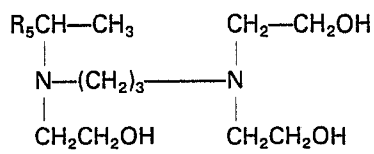

(II)

wherein $R_5$ is $C_9$—$C_{20}$ alkyl, in the respective dinitroaniline herbicide of formula-(I) prior to the preparation of the compositions referred to in the body of the present application. If so desired, other materials, such as ethyl cellulose may also be used to improve the high-temperature storage stability of said compositions.

Thus, the preparation of a typical formulation by the method of the present invention may be illustrated as follows:

On a weight basis, 56.97% of N-(1-ethylpropyl)-2,6-dinitro-3,4-xylidine and 1.51% of sodium dioctyl sulfosuccinate are heated to 70 to 75°C until a homogenous melt forms. The melt is maintained at 70 to 75°C and is sprayed onto a 20.76% by weight of the highly sorptive calcium silicate while the latter is being agitated by suitable means. When all of the melt is absorbed, the powdery solid is cooled to room temperature and 13.79% by weight of bentonite as hereinbefore defined is blended in. The mixture is then jet milled to a 5 to 10μm particle size range. The resultant powder is tumbled in a suitable granulator and sprayed with an aqueous solution containing 4.65% by weight (of formulation) of sodium N-methyl-N-oleoyltaurate and 2.32% by weight (of formulation) of the sodium salt of naphthalene sulfonic acid-formaldehyde condensate. The granules are then dried, separated to the desired size of 0,25—2,0 mm (i.e., about 10 to 60 mesh) and, if desired, coated with 1 to 5% by weight of a composition of a finely divided sorptive substrate, such as calcined powdered clays, diatomaceous earth, fumed silica, fumed silica which has been made hydrophobic by the replacement of most of the hydrophilic hydroxyl groups, which normally populate the silica surface, with trimethyl siloxyl groups as well as mixtures of said sorptive substrate, to aid in maintaining the free-flow characteristics of said compositions.

One method of the present invention prepared at elevated temperatures is further illustrated by the following examples which are not to be taken as limitative thereof.

## Example 4

### Evaluation of dispersible granular formulations of dinitroaniline herbicidess prepared by the method of the invention

The dinitroaniline herbicide and sodium dioctyl sulfosuccinate are melted together and the melt heated to 70 to 75°C. The molten material is then sprayed onto a highly sorptive silica with agitation, and agitation continues until the melt is absorbed. Next, bentonite as hereinbfore defined is added and the mixture jet milled to a 5 to 10μm particle size range. The milled powder is agitated and sprayed with an aqueous solution of sodium N-methyl-N-oleoyltaurate and the sodium salt of naphthalene sulfonic acid formaldehyde condensate. Agitation is continued until well formed granules are obtained. The compositions of two formulations is given in Table IV below.

TABLE IV
Composition of dispersible granular formulations of dinitroaniline herbicides

| Component | Formulation A | | Formulation B | |
|---|---|---|---|---|
| | g | % | g | % |
| N-(1-ethylpropyl)-2,6-dinitro-3,4-xylidine; 91% pure | 127.39 | 56.95 | — | — |
| α,α,α-trifluoro-2,6-dinitro-N,N-dipropyl-*p*-toluidine; 94% pure | — | — | 127.39 | 56.97 |
| Sodium dioctyl sulfosuccinate | 3.37 | 1.51 | 3.37 | 1.51 |
| Calcium silicate | 46.41 | 20.76 | 46.41 | 20.76 |
| Bentonite | 30.83 | 13.79 | 30.83 | 13.79 |
| Sodium N-methyl-N-oleoyl taurate | 10.40 | 4.65 | 10.40 | 4.65 |
| Sodium salt of naphthalene sulfonic acid condensate with formaldehyde | 5.20 | 2.32 | 5.20 | 2.32 |
| Total | 223.60 | 100.00 | 223.60 | 100.00 |

**Claims**

1. A method for the preparation of heatable dispersible granular compositions characterized by admixing, at ambient or elevated temperatures, 50 to 70%, on a weight basis, of a compound of structural formula (I)

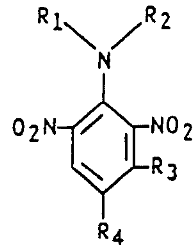

wherein $R_1$ is hydrogen, $C_1$—$C_4$ straight or branched-chain alkyl, $C_3$—$C_4$ alkenyl or $C_3$—$C_4$ alkynyl; $R_2$ is $C_1$—$C_6$ straight or branched-chain alkyl and optionally substituted with Cl or $OCH_3$, $C_3$—$C_4$ alkenyl or $C_3$—$C_4$ alkynyl, $R_3$ is hydrogen, $CH_3$ or $CH_2OCH_3$; $R_4$ is $C_1$—$C_4$ alkyl, $CF_3$ or Cl; 0.0% to 3% sodium dioctyl sulfosuccinate or ethoxylated diamines having the following formula,

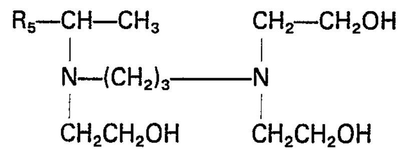

wherein $R_5$ is $C_9$—$C_{20}$ alkyl; 2 to 7.5% of a wetting agent selected from sodium N-methyl-N-oleoyltaurate, octylphenoxy polyethoxy ethanol and nonylphenoxy polyethoxy ethanol; 2 to 6% of a dispersing agent selected from sodium lignin sulfonate and the sodium salt of a naphthalene sulfonic acid-formaldehyde condensate; 0.0 to 7.5% of a highly sorptive hydrophilic or hydrophobic precipitated silica or fumed silica or calcium silicate; and naturally-occurring swelling, hydrous sodium and magnesium aluminum silicate clays having a montmorillonite unit cell structure in amounts sufficient to total the composition to 100%; cooling the thus-obtained mixture if admixed at elevated temperatures; milling said mixture to a particle size of about 5 to 10μm; and granulating same with water.

2. A method acording to Claim 1 admixed at elevated temperatures, characterized by melting 50 to 70%, on a weight basis, a compound of formula (I); mixing with said melted formula (I) compound, about 1 to 3% sodium dioctyl sulfosuccinate or ethoxylated diamines having the following formula,

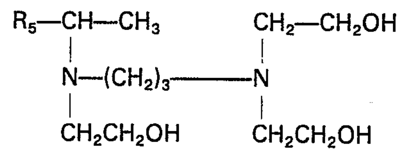

wherein $R_5$ is $C_9$—$C_{20}$ alkyl; heating said mixture to 20—25°C above the melting point of the formula (I) compound; spraying said melt onto 5 to 25% by weight highly sorptive hydrophilic or hydrophobic precipitated or fumed silica or calcium silicate with agitation until all of the melt is absorbed; cooling the thus obtained mixture; adding a swelling clay selected from attapulgite, montmorillonite, bentonite, or kaolin, in amounts to adjust the sum of ingredients to 100%; milling said mixture to a size range of 5 to 10 μm; and granulating same with an aqueous solution of 2 to 7.5% of a wetting agent selected from N-methyl-N-oleoyltaurate, octylphenoxy polyethoxy ethanol, or nonylphenoxy polyethoxy ethanol; and 2 to 6% dispersing agent selected from sodium lignin sulfonate and the sodium salt of a naphthalene sulfonic acid-formaldehyde condensate.

3. A method according to Claim 1, wherein said formula (I) compound is N-(1-ethylpropyl)-2,6-dinitro-3,4-xylidene, α,α,α-trifluoro-2,6-dinitro-N,N-dipropyl-*p*-toluidine, or N-butyl-N-ethyl-α,α,α-trifluoro-2,6-dinitro-*p*-toluidine and comprises 50 to 70% by weight of the formulation.

4. A method according to Claim 1 admixed at elevated temperatures, wherein, on a weight basis, 50 to 60% α,α,α-trifluoro-2,6-dinitro-N,N-dipropyl-*p*-toluidine is melted with 2.5 to 7.5% of the wetting agent sodium N-methyl-N-oleoyltaurate; 2.0 to 6% of the dispersing agent sodium salt of naphthalene sulfonic acid-formaldehyde condensate; 0.0 to 7.5% of the precipitated silica; and said swelling clay in amounts sufficient to total the formulation to 100%.

5. A method according to Claim 1 admixed at ambient temperatures, excepting that 0.25 to 1.0% by weight of fumed silica is used to coat the granules with the amount of said swelling clay used lowered by that amount, and the formula (I) compound is N-(1-ethylpropyl)-2,6-dinitro-3,4-xylidene.

6. A method according to Claim 1 admixed at ambient temperatures, wherein, on a weight basis, 50 to 60% N-(1-ethylpropyl)-2,6-dinitro-3,4-xylidine, containing 1.1 to 2.5% by weight of sodium dioctyl sulfosuccinate is admixed with 2.5 to 7.5% of the wetting agent, sodium N-methyl-N-oleoyltaurate; 2.0 to 6.0% of the sodium salt of naphthalene sulfonic acid-formaldehyde condensate; 0.0% to 7.5% by weight precipitated silica; and said swelling clay in amounts sufficient to total the formulation to 100%.

7. A method according to Claim 1 admixed at ambient temperatures, excepting that 0.25 to 1.0% by weight of fumed silica is used to coat the granules with the amount of said swelling clay lowered by that amount.

8. A method according to Claim 1 admixed at ambient temperatures, wherein the amount of N-(1-ethylpropyl)-2,6-dinitro-3,4-xylidine is 60%; the amount of sodium dioctyl sulfosuccinate is 1.1%; the amount of said swelling clay is 22.0%; the amount of precipitated silica is 3.6%; and the amount of the sodium N-methyl-N-oleoyltaurate is 5%; and the amount of the sodium salt of naphthalene sulfonic acid-formaldehyde condensate is 2.5%.

9. A dispersible granular composition of a 0,25-2,0 mm (10 to 60 mesh) range comprising, on a weight basis, an intimate mixture of 50 to 70% of a compound of structural formula (I) with a melting point below 100°C,

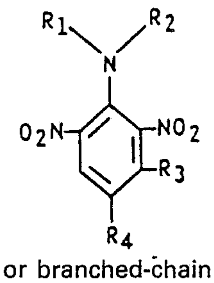

wherein $R_1$ is hydrogen, $C_1$—$C_4$ straight or branched-chain alkyl, $C_3$—$C_4$ alkenyl or $C_3$—$C_4$ alkynyl; $R_2$ is $C_1$—$C_6$ straight or branched-chain alkyl and optionally substituted with Cl or $OCH_3$, $C_3$—$C_4$ alkenyl or $C_3$—$C_4$ alkynyl, $R_3$ is hydrogen, $CH_3$ or $CH_2OCH_3$; $R_4$ is $C_1$—$C_4$ alkyl, $CF_3$ or Cl; 0.0% to 3% sodium dioctyl sulfosuccinate or ethoxylated diamines having the following formula,

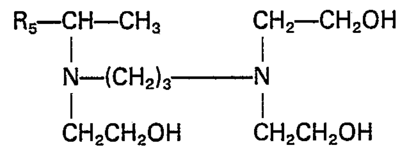

wherein $R_5$ is $C_9$—$C_{20}$ alkyl; 2 to 7.5% of a wetting agent selected from sodium N-methyl-N-oleoyltaurate, octylphenoxy polyethoxy ethanol and nonylphenoxy polyethoxy ethanol; 2 to 6% of a dispersing agent selected from sodium lignin sulfonate and the sodium salt of a naphthalene sulfonic acid-formaldehyde condensate; 0.0 to 7.5% of a hydrophilic precipitated silica; 0.0 to 1.0% of a fumed silica; and naturally-occurring swelling, hydrous sodium and magnesium aluminum silicate clays having a montmorillonite unit cell structure in amounts sufficient to total the composition to 100%.

10. A heat-stable wettable powder composition comprising, on a weight basis, an intimate mixture of 50 to 70% of a compound of structural formula (I) with a melting point below 100°C,

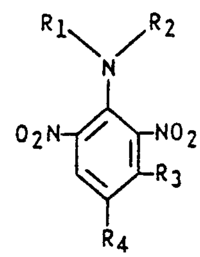

wherein $R_1$ is hydrogen, $C_1$—$C_4$ straight or branched-chain alkyl, $C_3$—$C_4$ alkenyl or $C_3$—$C_4$ alkynyl; $R_2$ is $C_1$—$C_6$ straight or branched-chain alkyl and optionally substituted with Cl or $OCH_3$, $C_3$—$C_4$ alkenyl or $C_3$—$C_4$ alkynyl, $R_3$ is hydrogen, $CH_3$ or $CH_2OCH_3$; $R_4$ is $C_1$—$C_4$ alkyl, $CF_3$ or Cl; 0.0% to 3% sodium dioctyl sulfosuccinate or ethoxylated diamines having the following formula,

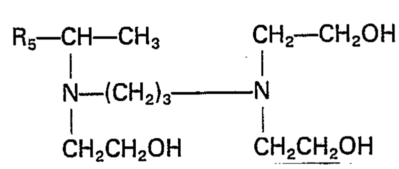

wherein $R_5$ is $C_9$—$C_{20}$ alkyl; 2 to 7.5% of a wetting agent selected from sodium N-methyl-N-oleoyltaurate,

octylphenoxy polyethoxy ethanol and nonylphenoxy polyethoxy ethanol; 2 to 6% of a dispersing agent selected from sodium lignin sulfonate and the sodium salt of a naphthalene sulfonic acid-formaldehyde condensate; 0.0% to 7.5% by weight of a hydrophilic precipitated silica; and naturally-occurring swelling, hydrous sodium and magnesium aluminum silicate clays having a montmorillonite unit cell structure in amounts sufficient to total the composition to 100%.

**Patentansprüche**

1. Verfahren zur Herstellung von wärmestabilen, dispergierbaren, granulierten Zusammensetzung, dadurch gekennzeichnet, daß man bei Umgebungstemperatur oder erhöhten Temperaturen 50 bis 70 Gew.-% einer Verbindung der Strukturformel (I)

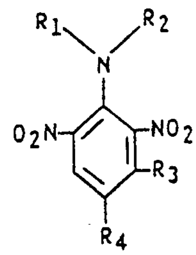

wobei $R_1$ für Wasserstoff, $C_1$—$C_4$-geradkettiges oder verzweigtkettiges Alky, $C_3$—$C_4$-Alkenyl oder $C_3$—$C_4$-Alkinyl steht; $R_2$ für $C_1$—$C_6$-geradkettiges oder verzweigtkettiges Alkyl, gegebenenfalls substituiert mit Cl oder $OCH_3$, steht oder für $C_3$—$C_4$-Alkenyl oder $C_3$—$C_4$-Alkinyl; $R_3$ für Wasserstoff, $CH_3$ oder $CH_2OCH_3$ steht; $R_4$ für $C_1$—$C_4$-Alkyl, $CF_3$ oder Cl steht; vermischt mit 0,0 bis 3% Natriumdioktylsulfosuccinat oder ethoxylierten Diaminen der folgenden Formel

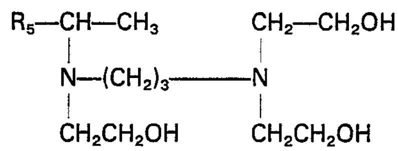

wobei $R_5$ für $C_9$—$C_{20}$-Alkyl steht; 2 bis 7,5% eines Benetzungsmittels, ausgewählt aus Natrium-N-methyl-N-oleyl-taurat, Oktylphenoxypolyethoxyethanol und Nonylphenoxypolyethoxyethanol; 2 bis 6% eines Dispersionsmittels, ausgewählt aus Natriumligninsulfonat und dem Natriumsalz eines Naphthalinsulfonsäure-Formaldehyd-Kondensats; 0,0 bis 7,5% einer in hohem Maße sorbitven, hydrophilen oder hydrophohen, gefällten Kieselsäure oder pryrogenen Kieselsäure oder Calciumsilikat; und natürlich vorkommenden, quellenden, wasserhaltigen Natrium- und Magnesiumaluminiumsilikat-Tonen mit einer Montmorillonit-Einheitszellenstruktur in ausreichenden Mengen, um di Gesamtmenge der Zusammensetzung auf 100% zu bringen; das so erhaltene Gemisch abkühlt, falls die Vermischung bei erhöhten Temperaturen erfolgte; das Gemische auf einen Teilchengrößenbereich von etwa 5 bis 10 µm zermahlt und mit Wasser granuliert.

2. Verfahren gemäß Anspruch 1, wobei die Vermischung bei erhöhten Temperaturen erfolgt, dadurch gekennzeichnet, daß man 50 bis 70 Gew.-% einer Verbindung der Formel (I) schmilzt; die geschmolzene Verbindung der Formel (I) vermischt mit etwa 1 bis 3% Natriumdioktylsulfosuccinat oder ethoxylierten Diaminen der folgenden Formel

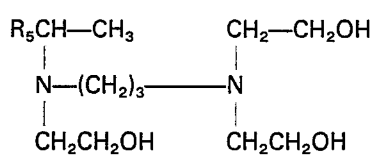

wobei $R_5$ für $C_9$—$C_{20}$-Alkyl steht; das genannte Gemisch bis auf 20 bis 25°C über dem Schmelzpunkt der Verbindung der Formel (I) erhitzt; die Schmelze auf 5 bis 25 Gew.-% in hohem Maße sorbtionsfähige hydrophile oder hydrophobe, gefällte oder pyrogene Kieselsäure oder Calciumsilikat aufsprüht unter Rühren, bis die gesamte Schmelze absorbiert ist; das so erhaltene Gemisch abkühlt; einen quellenden Ton, ausgewählt aus Attapulgit, Montmorillonit, Bentonit oder Kaolin zusetzt, und zwar in Mengen, um die Summe der Bestandteile auf 100% zu bringen; das Gemisch auf einen Größenbereich von 5 bis 10 µm zermahlt und dasselbe granuliert mit einer wässrigen Lösung von 2 bis 7,5% eines Benetzungsmittels, ausgewählt aus N-Methyl-N-oleyltaurat, Oktylphenoxypolyethoxyethanol oder Nonylphenoxypolyethoxyethanol; und 2 bis 6% Dispersionsmittel, ausgewählt aus Natriumligninsulfonat und dem Natriumsalz von einem Naphthalinsulfonsäure-Formaldehyd-Kondensats.

3. Verfahren gemäß Anspruch 1, wobei die Verbindung der Formel (I) N-(1-Ethylpropyl)-2,6-dinitro-3,4-xylidin, α,α,α-Trifluor-2,6-dinitro-N,N-dipropyl-*p*-toluidin oder N-Butyl-N-ethyl-α,α,α-trifluor-2,6-dinitro-*p*-toluidin ist und 50 bis 70 Gew.-% der Formulierung ausmacht.

4. Verfahren gemäß Anspruch 1, wobei die Vermischung bei erhöhten Temperaturen erfolgt und wobei auf Gewichtsbasis 50 bis 60% α,α,α-Trifluor-2,6-dinitro-N,N-dipropyl-*p*-toluidin geschmolzen werden mit 2,5 bis 7,5% des Vernetzungsmittels Natrium-N-methyl-N-oleyltaurat; 2,0 bis 6% des Dispersionsmittels Natriumsalz von Naphthalinsulfonsäure-Formaldehyd-Kondensat; 0,0 bis 7,5% der gefällten Kieselsäure und dem genannten quellenden Ton in ausreichenden Mengen, um die Gesamtmenge de Formulierung auf 100% zu bringen.

5. Verfahren gemäß Anspruch 1, wobei die Vermischung bei Umgebungstemperaturen erfolgt und mit der Ausnahme, daß 0,25 bis 1,0-Gew.% pyrogene Kieselsäure verwendet werden, um das Granulat zu beschichten, wobei die eingestezte Menge des genannten quellenden Tons um driese Menge verringert wird und wobei die Verbindung der Formel (I) N-(1-Ethylpropyl)-2,6-dinitro-3,4-xylidin ist.

6. Verfahren gemäß Anspruch 1, wobei die Vermischung bei Umgebungstemperaturen erfolgt und wobei auf Gewichtsbasis 50 bis 60% N-(1-Ethylpropyl)-2,6-dinitro-3,4-xylidin, enthaltend 1,1 bis 2,5 Gew.-% Natriumdioktylsulfosuccinat, vermischt werden mit 2,5 bis 7,5% des Benetzungsmittels Natrium-N-methyl-N-oleytaurat; 2,0 bis 6,0% des Natriumsalzes von Naphthalinsulfonsäure-Formaldehyd-Kondensates; 0,0 bis 7,5 Gew.-% gefällte Kieselsäure; und dem genannten quellenden Ton in ausreichenden Mengen, um die Gesamtmenge der Formulierung auf 100% zu bringen.

7. Verfahren gemäß Anspruch 1, wobei die Vermischung bei Umgebungstemperaturen erfolgt und mit der Ausnahme, daß 0,25 bis 1,0 Gew.-% pyrogene Kieselsäure verwendet wird, um das Granulat zu beschichten, wobei die Menge des genannten quellenden Tons um diese Menge verringert wird.

8. Verfahren gemäß Anspruch 1, wobei die Vermischung bei Umgebungstemperaturen erfolgt, wobei die Menge an N-(1-Ethylpropyl)-2,6-dinitro-3,4-xylidin 60% beträgt; die Menge an Natriumdioktylsulfosuccinat 1,1% betragt; die Menge an dem genannten quellenden Ton 22,0% beträgt; die Menge der gefällten Kieselsäure 3,6% beträgt; und die Menge des Natrium-N-methyl-N-oleyltaurats 5% betragt; und die Menge des Natriumsalzes von Naphthalinsulfonsäure-Formaldehyd-Kondensats 2,5% beträgt.

9. Eine dispergierbare, granulierte Zusammensetzung mit einem 0,25 bis 2,0 mm (10 bis 60 mesh) Bereich, umfassend auf Gewichtsbasis ein inniges Gemisch von 50 bis 70% einer Verbindung der Strukturformel (I) mit einem Schmelzpunkt unter 100°C

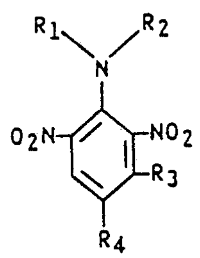

wobei $R_1$ für Wasserstoff, geradkettiges oder verzweigtkettiges $C_1$—$C_4$-Alkyl, $C_3$—$C_4$-Alkenyl oder $C_3$—$C_4$-Alkinyl steht; $R_2$ für $C_1$—$C_6$-geradkettiges oder verzweigtkettiges Alkyl, gegebenenfalls substituiert mit Cl oder $OCH_3$, steht oder für $C_3$—$C_4$-Alkenyl oder $C_3$—$C_4$-Alkinyl; $R_3$ für Wasserstoff, $CH_3$ oder $CH_2OCH_3$ steht; $R_4$ für $C_1$—$C_4$-Alkyl, $CF_3$ oder Cl steht; 0,0 bis 3% Natriumdioktylsulfosuccinat oder ethoxylierte Diamine der folgenden Formel

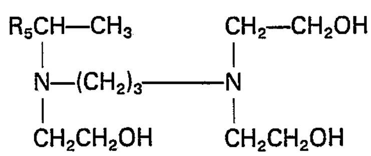

wobei $R_5$ für $C_9$—$C_{20}$-Alkyl steht; 2 bis 7,5% eines Benetzungsmittels, ausgewählt aus Natrium-N-methyl-N-oleyl-taurat, Oktylphenoxypolyethoxyethanol und Nonylphenoxypolyethoxyethanol; 2 bis 6% eines Dispersionsmittels, ausgewählt aus Natriumligninsulfonat und dem Natriumsalz eines Naphthalinsulfonsäure-Formaldehyd-Kondensats; 0,0 bis 7,5% einer hydrophilen gefällten Kieselsäure; 0,0 bis 1,0% einer pyrogenen Kieselsäure; und natürlich vorkommenden, quellenden, wasserhaltigen Natrium- und Magnesiumaluminiumsilikat-Tonen mit einer Montmorillonit-Einheitszellenstruktur in einer ausreichenden Menge, um die Gesamtmenge der Zusammensetzung auf 100% zu bringen.

10. Hitzestabile benetzbare Pulverzusammensetzung, umfassend auf Gewichtsbasis ein inniges Gemisch von 50 bis 70% einer Verbindung der Strukfurformel (I) mit einem Schmelzpunkt unter 100°C

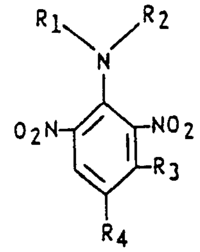

wobei $R_1$ für Wasserstoff, geradkettiges oder verzweigtkettiges $C_1$—$C_4$-Alkyl, $C_3$—$C_4$-Alkenyl oder $C_3$—$C_4$-Alkinyl steht; $R_2$ für $C_1$—$C_6$-geradkettiges oder verzweigtkettiges Alkyl, gegebenenfalls substituiert mit Cl oder $OCH_3$, steht oder für $C_3$—$C_4$-Alkenyl oder $C_3$—$C_4$-Alkinyl; $R_3$ für Wasserstoff, $CH_3$ oder $CH_2OCH_3$ steht; $R_4$ für $C_1$—$C_4$-Alkyl, $CF_3$ oder Cl steht; 0,0 bis 3% Natriumdioktylsulfosuccinat oder ethoxylierte Diamine der folgenden Formel

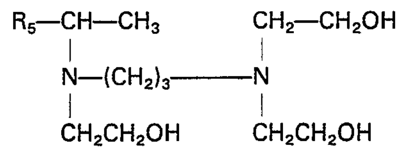

wobei $R_5$ für $C_9$—$C_{20}$-Alkyl steht; 2 bis 7,5% eines Benetzungsmittels, ausgewählt aus Natrium-N-methyl-N-oleyl-taurat, Oktylphenoxypolyethoxyethanol und Nonylphenoxypolyethoxyethanol; 2 bis 6% eines Dispersionsmittels, ausgewählt aus Natriumligninsulfonat und dem Natriumsalz eines Naphthalinsulfonsäure-Formaldehyd-Kondensats; 0,0 bis 7,5% hydrophile gefällte Kieselsäure; und natürlich vorkommende, quellende, wasserhaltige Natrium- und Magesiumaluminiumsilikat-Tone mit einer Montmorillonit-Einheitszellenstruktur in einer ausreichenden Mengen, um die Gesamtmenge der Zusammensetzung auf 100% zu bringen.

**Revendications**

1. Procédé pour la préparation de compositions granulaires dispersables, stables à la chaleur, caractérisé en ce qu'on mélange, à la température ambiante ouo à des températures élevées, de 50 à 70% en poids d'un composé de formule développée (I)

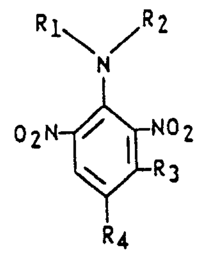

dans laquelle $R_1$ est un atome d'hydrogène, un groupe alkyle en $C_1$—$C_4$ à chaîne droite ou ramifée, alcényle en $C_3$—$C_4$ ou alcynyle en $C_3$—$C_4$; $R_2$ est un groupe alkyle en $C_1$—$C_6$ à chaîne droite ou ramifiée et éventuellement substitué par Cl ou $OCH_3$, un groupe alcényle en $C_3$—$C_4$ ou alcynyle en $C_3$—$C_4$; $R_3$ est un atome d'hydrogène, $CH_3$ ou $CH_2OCH_3$; $R_4$ est un groupe alkyle en $C_1$—$C_4$, $CF_3$ ou Cl; de 0,0 à 3% de dioctylsulfosuccinate de sodium ou de diamines éthoxylées de formule suivante

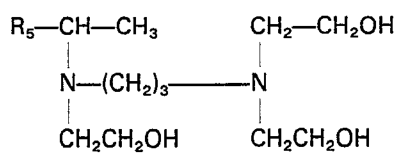

dans laquelle $R_5$ est un groupe alkyle en $C_9$—$C_{20}$; de 2 à 7,5% d'un agent mouillant choisi parmi le N-méthyl-N-oléoyltaurate de sodium, l'octylphénoxy-polyéthoxy-éthanol et le nonylphénoxy-polyéthoxy-éthanol; de 2 à 6% d'un agent de dispersion parmi le ligninesulfonate de sodium et le sel de sodium d'un produit de condensation du formaldéhyde et de l'acide naphtalènesulfonique; de 0,0 à 7,5% d'une silice précipitée ou silice de calcination ou silicate de calcium, hydrophile ou hydrophobe, à grand pouvoir d'absorption; et d'argiles gonflantes, de type silicate d'aluminium, sodium et magnésium hydraté, existant

dans la nature, ayant une structure de maille élémentaire de type montmorillonite, en quantités suffisantes pour porter le total de la composition à 100%; on refroidit la composition ainsi obtenue, si elle a été mélangée à hautes températures; on broie ladite composition à une taille de particules allant d'environ 5 à 10 μm; et on granule celle-ci avec de l'eau.

2. Procédé selon la revendication 2, le mélange étant effectué à des températures élevées, caractérisé en ce qu'on fait fondre de 50 à 70% en poids d'un composé de formule (I); on mélange avec ledit composé de formule (I) fondu, d'environ 1 à 3% de dioctylsulfosuccinate de sodium ou de diamines éthoxylées de formule suivante

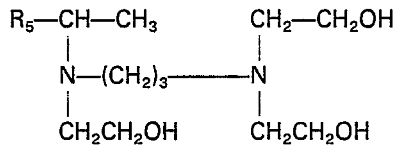

dans laquelle $R_5$ est un groupe alkyle en $C_9$—$C_{20}$; on chauffe ladite compositions à 20—25°C au-dessus du point de fusion du composé de formule (I); on applique par pulvérisation, avec agitation, ladite masse fondue sur 5 à 25% en poids d'une silice précipitée ou de calcination ou d'un silicate de calcium, hydrophile ou hydrophobe, à grand pouvoir absorbant, jusqu'à ce que toute la masse foundue soit absorbée; on refroidit la composition ainsi obtenue; on ajoute une argile gonflante choisie parmi l'attapulgite, la montmorillonite, la bentonite ou le kaolin, en quantités suffisantes pour porter le total des composants à 100%; on broie ladite composition à une taille de particules allant de 5 à 10 μm; et on granule celle-ci avec une solution aqueuse de 2 à 7,5% d'un agent mouillant choisi parmi le N-méthyl-N-oléoyltaurate de sodium, l'octylphénoxy-polyéthoxy-éthanol ou le nonylphénoxy-polyéthoxy-éthanol; et de 2 à 6% d'un agent de dispersion choisi parmi le ligninesulfonate de sodium et le sel de sodium d'un produit de condensation du formaldéhyde et de l'acide naphtalènesulfonique.

3. Procédé selon la revendication 1, dans lequel ledit composé de formule (I) est la N-(1-éthylpropyl)-2,6-dinitro-3,4-xylidine, l'α,α,α-trifluoro-2,6-dinitro-N,N-dipropyl-p-toluidine ou la N-butyl-N-éthyl-α,α,α-trifluoro-2,6-dinitro-p-toluidine, et représente 50 à 70% en poids de la formulation.

4. Procédé selon la revendication 1, le mélange étant effectué à des températures élevées, dans lequel on fait fondre 50 à 60% en poids d'α,α,α-trifluoro-2,6-dinitro-N,N-dipropyl-p-toluidine avec 2,5 à 7,5% en poids de l'agent mouillant N-méthyl-N-oléoyltaurate de sodium; 2,0 à 6% en poids du sel de sodium d'un produit de condensation du formaldéhyde et de l'acide naphtalènesulfonique comme agent de dispersion; 0,0 à 7,5% de la silice précipitée, et ladite argile gonflante en quantités suffisantes pour porter le total de la formulation à 100%.

5. Procédé selon la revendication 1, le mélange étant effectué à la température ambiante, mis à part que l'on utilise 0,25 à 1,0% en poids de silice de calcination pour revêtir les granulés, la quantité de ladite argile gonflante utilsée étant diminuée de cette quantité, et le composé de formule (I) est la N-(1-éthylpropyl)-2,6-dinitro-3,4-xylidine.

6. Procédé selon la revendication 1, le mélange étant effectué à la température ambiante, dans lequel on mélange, en poids, 50 à 60% de N-(1-éthylpropyl)-2,6-dinitro-3,4-xylidine, contenant de 1,1 à 2,5% en poids de dioctylsulfosuccinate de sodium, avec 2,5 à 7,5% de l'agent mouillant N-méthyl-N-oléoyltaurate de sodium; 2,0 à 6,0% du sel de sodium d'un produit de condensation du formaldéhyde et de l'acide naphtalènesulfonique; 0,0 à 7,5% en poids de silice précipitée; et ladite argile gonflante en quantités suffisants pour porter le total de la formulation à 100%.

7. Procédé selon la revendication 1, le mélange étant effectué à la température ambiante, mis à part que l'on utilise pour revêtir les granulés, 0,25 à 1,0% en poids de silice de calcination, la quantité de ladite argile gonflante étant diminuée de cette quantité.

8. Procédé selon la revendication 1, le mélange étant effectué à la température ambiante, dans lequel la quantité de la N-(1-éthylpropyl)-2,6-dinitro-3,4-xylidine est 60%; la quantité du dioctylsulfosuccinate de sodium et 1,1%; la quantité de ladite argile gonflante est 22,0%: la quantité de la silice précipitée est 3,6%; la quantité du N-méthyl-N-oléoyltaurate de sodium est 5%; et la quantité du sel de sodium du produit de condensation du formaldéhyde et de l'acide naphtalènesulfonique est 2,5%.

9. Composition granulaire dispersable ayant une taille de particules allant de 0,25 à 2,0 mm comprenant, en poids, un mélange intime de 50 à 70% d'une composé de formule développée (I), ayant un point de fusion inférieur à 100°C

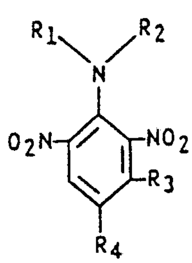

dans laquelle $R_1$ est un atome d'hydrogène, un groupe alkyle en $C_1$—$C_4$ à chaîne droite ou ramifée, alcényle en $C_3$—$C_4$ ou alcynyle en $C_3$—$C_4$; $R_2$ est un groupe alkyle en $C_1$—$C_6$ à chaîne droite ou ramifée et éventuellement substitué par Cl ou $OCH_3$, un groupe alcényle en $C_3$—$C_4$ ou alcynyle en $C_3$—$C_4$; $R_3$ est une atome d'hydrogène, $CH_3$ ou $CH_2OCH_3$; $R_4$ est un groupe alkyle en $C_1$—$C_4$, $CF_3$ ou Cl; de 0,0 à 3% de dioctylsulfosuccinate de sodium ou de diamines éthoxylées de formule suivante

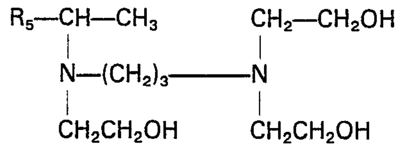

dans laquelle $R_5$ est un groupe alkyle en $C_9$—$C_{20}$; de 2 à 7,5% d'un agent mouillant choisi parmi le N-méthyl-N-oléoyltaurate de sodium, l'octylphénoxy-polyéthoxy-éthanol et le nonylphénoxy-polyéthoxy-éthanol; de 2 à 6% d'un agent de dispersion choisi parmi le ligninesulfonate de sodium et le sel de sodium d'un produit de condensation du formaldéhyde et de l'acide naphtalènesulfonique; de 0,0 à 7,5% d'une silice précipitée hydrophile; de 0,0 à 1,0% d'une silice de calcination; et d'argiles gonflantes, de type silicate d'aluminium, sodium et magnèsium hydraté, existant dans la nature, ayant une structure de maille élémentaire de type montmorillonite, en quantités suffisantes pour porter le total de la composition à 100%.

10. Composition de poudre mouillable stable à la chaleur, comprenant, en poids, un mélange intime de 50 à 70% d'un composé de formule développée (I), ayant un point de fusion inférieur à 100°C,

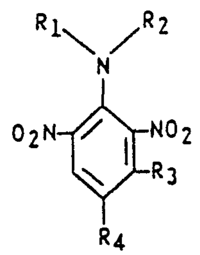

dans laquelle $R_1$ est un atome d'hydrogène, un groupe alkyle en $C_1$—$C_4$ à chaîne droite ou ramifée, alcényle en $C_3$—$C_4$ ou alcynyle en $C_3$—$C_4$; $R_2$ est un groupe alkyle en $C_1$—$C_6$ à chaîne droite ou ramifée et éventuellement substitué par Cl ou $OCH_3$, un groupe alcényle en $C_3$—$C_4$ ou alcynyle en $C_3$—$C_4$; $R_3$ est un atome d'hydrogène, $CH_3$ ou $CH_2OCH_3$; $R_4$ est un groupe alkyle en $C_1$—$C_4$, $CF_3$ ou Cl; de 0,0 à 3% de dioctylsulfosuccinate de sodium ou de diamines éthoxylées de formule suivante

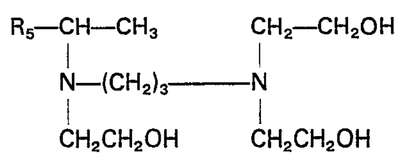

dans laquelle $R_5$ est un groupe alkyle en $C_9$—$C_{20}$; de 2 à 7,5% d'un agent mouillant choisi parmi le N-méthyl-N-oléoyltaurate de sodium, l'octylphénoxy-polyéthoxy-éthanol et le nonylphénoxy-polyéthoxy-éthanol; de 2 à 6% d'un agent de dispersion choisi parmi le ligninesulfonate de sodium et le sel de sodium d'un produit de condensation du formaldéhyde et de l'acide naphtalènesulfonique; de 0,0 à 7,5% d'une silice précipitée hydrophile; et d'argiles gonflantes, de type silicate d'aluminium, sodium et magnésium hydraté, existant dans la nature, ayant une structure de maille élémentaire de type montmorillonite, en quantités suffisantes pour porter le total de la composition à 100%.